# EUROPEAN PATENT APPLICATION

(11) **EP 1 990 174 A1**
(43) Date of publication of application: **12.11.2008**
(21) Application number: 07108057.6
(22) Date of filing: 11.05.2007
(51) Int. Cl.: B29C 45/16, B65D 1/24

(54) **Injection moulded crate**

(71) Applicant: D.W. PLASTICS N.V., 3740 Bilzen (BE)
(72) Inventor: The designation of the inventor has not yet been filed
(74) Representative: van Westenbrugge, Andries

(57) **Abstract**

The invention relates to an injection moulded crate comprising a bottom part (6) and walls (7), wherein at least part of one or more selected from the group consisting of the bottom part and walls comprise a laminate of a first polyalkene and a second polyalkene wherein the second polyalkene material has a higher Melt Flow Index than the first polyalkene material.

## Description

### Background

The present invention relates to an injection moulded crate, an injection mould and a method for producing an injection moulded crate.

It is well known in the art to make crates from synthetic material using injection moulding techniques. A well known problem in this field is to produce a crate having sections with different and/or contrasting colours. In particular, these sections when representing for instance house styles, need to look very taut and well defined. Furthermore, these items need to be very scratch-proof and must not be damaged in use. In particular, in crates used for bottles for instance, these scratch and damage resistance has to meet very high standards.

Well known techniques for applying house styles on a wall of a crate is to use inmould labelling. In that technique, a printed label is placed inside a mould cavity against a wall of the mould before injection moulding. A disadvantage of this technique is that these inmould labels are expensive, they need handling and positioning in a mould, and need to attach to the mould wall.

An other well known technique is to paint or print the logo's , text or characters in order to produce these house styles. A disadvantage of this technique is that it is time consuming and the paint needs to dry. Furthermore, paint layers or printed layers may easily get damaged or get scratched, and therefore the printed area needs to be recessed to form a print protection.

Another technique to decorate a crate is embossing or deepening parts or indications. Another technique to decorate a crate is using different structure and/or high gloss combinations to realise contrasting effects.

A well known technique in moulding crates is so-called two-component moulding or overmoulding. In this technique, a large part of the crate is first moulded in a first moulding cavity using a first synthetic material, often HDPE, polypropylene or the like. In a next production step, this crate section is positioned in a second mould. This second mould has walls which leave part of the walls of the crate section free, thus creating a moulding cavity bounded by mould walls and the surface of the crate section. Using a second synthetic material, often a thermoplastic elastomeric polymer, a part of the surface of the crate section is covered, for instance for forming soft grip handles. A well known technique for preventing synthetic material at the boundary to accidentally blend is surrounding the area to be overmoulded using a groove around this area in the crate section, or to provide the crate section with a lip or joggle around this area. When placing the injection moulded crate in the second mould, the wall of the mould should lay against these lips or extend in these grooves and thus seal the area to be overmoulded. This technique, however, is up to now only suited and used for two component moulding or overmoulding of large areas in relatively thick layers, mostly using elastomeric polymers. In this way, for instance soft grips are formed on bottle crates. Tests have shown that elastomeric polymers require relatively thick layers for good adhesion to the crate. An other problem of this so-called "soft touch material" is its poor robustness against scratching. Moreover, the elastomeric polymers are rather expensive and more difficult to recycle.

Two-component moulding is also used for moulding an upper section of a crate in colour "B" over a lower section in colour "A". A problem with this method that it tends to compromise too much the strength of the crate.

Two-component moulding is also used to overmould a section of a crate thus forming a layer on a crate wall with a standard Poly-Ethylene. A problem with this method is that it will introduce mechanical stress in the wall of the crate. The reason is different shrinkage for the crate itself and the overmoulded layer adhered to the crate. The stresses lead to deformations of the crate and may eventually lead to cracks and/or breakage.

The term "Melt Flow Index" (MFI) as used in this application is defined as the amount, in grams, of a thermoplastic resin which can be forced through an extrusion rheometer orifice of 0.0825 inch diameter when subjected to a force of 2160 grams in ten minutes at 190°C.

### Summary of the invention

The invention aims to provide a new method for providing a crate having sections with different and/or contrasting colours for instance a crate as a carrier of a companies house style.

To that end, the invention provides an injection moulded crate comprising a bottom part and walls, said crate comprising a first crate section injection moulded using a first polyalkene (polyolefin) material and a second crate section subsequently injection moulded over at least a part of said first crate section using a second polyalkene material, wherein the second polyalkene material has a higher Melt Flow Index (MFI) than the first polyalkene material.
The invention provides an injection moulded crate comprising a bottom part and walls, wherein at least part of one or more selected from the group consisting of the bottom part and walls comprise a laminate of a first polyalkene and a second polyalkene, wherein the second polyalkene material has a higher Melt Flow Index than the first polyalkene material.
Because of the different MFI of the two sections, it enables dimensioning the sections in such a way that mechanical stresses at the interface between crate sections are reduced.
In a preferred embodiment of the injection moulded crate according to the invention, the MFI of the second material is higher than 20 (MFI>20). This high MFI enables injection moulding of a cavity comprising a elongate and/or thin layer. Because of the high MFI, the material has good flow properties, this results in good bonding between the crate sections and reducing of mechanical stress caused by shrinkage. Tests performed by the applicant showed good and durable bonding of the crate sections at their interface. The MFI of the first section is smaller than 10 (MFI<10).

In a preferred embodiment of the injection moulded crate according to the invention, the thickness of said first crate section is higher then the thickness of said second crate section. More preferable the thickness of the second crate section is between 1.0 mm and 2.0 mm whereas the thickness of the first crate section is between 1.5 mm and 3.0 mm. This ratio of thicknesses will reduce the mechanical stresses in the interface between the crate sections.
In a preferred embodiment of the injection moulded crate according to the invention, the first polyalkene material and the second polyalkene material have a different colour. These colours can be defined b y a colour code like for instance a RAL code.
In a preferred embodiment of the injection moulded crate according to the invention, the second crate section continues at an edge of the crate and extends over walls of the crate. This gives a fine appearance to the crate.
In a preferred embodiment of the injection moulded crate according to the invention, the second crate section is circumferential with regard to the crate.
In a preferred embodiment of the injection moulded crate according to the invention, the first polyalkene material and the second material comprise a PE, HDPE and/or PP. In this way, both crate sections contribute to the mechanical strength of the crate because these materials adhere very well to each other at the interface of the sections. The invention further provides a method for injection moulding a crate using polyalkene material, comprising the steps of:
- injection moulding a first crate section in a first mould using a first polyalkene material;
- providing a second injection mould which comprises a cavity having a contour of a second crate section;
- positioning said first crate section in said second injection mould with said first crate section at least partly forming a moulding cavity, and
- injecting a second polyalkene material in said moulding cavity, said second polyalkene material having a MFI >20.
The invention further provides an injection mould for injection moulding a plastic crate for providing a crate section with a contrasting colour, wherein the injection mould comprises an accommodation for receiving said plastic crate, a mould wall having the contour of said crate section cut out in said mould wall, said crate providing a mould cavity forming wall and wherein the mould is equipped for being injected with a polyalkene material having a MFI >20.

This method provides the possibility of producing a crate having indications like a brand name or a logo or a house style on a wall of a crate. In particular, it makes it possible to provide indications in a colour which contrasts with the colour of the further crate.

Using the method of the invention, it proved to be possible to provide crates with a new type of indications. For instance, when using a different colour of plastic, the indications would visually stand out against the background. This indication can be as scratch resistant and have all the beneficial properties of the further surface of the crate.

A combination of the method of the invention with other known technique is also possible. For example a combination with inmould labelling wherein the label is moulded within the second crate section. The colour of this crate section can be tuned to the label.

Furthermore, it proved possible to use the same or comparable material, which makes this crate recyclable in its entirety.

Furthermore, the crate can be produced economically and provides a durable crate with new aesthetic possibilities.

Further embodiments of the inventions are described in the dependent claims. The features of these dependent claims may independently serve as a basis for a divisional filing.

The various aspects discussed in this patent can be combined in order to provide additional advantages.

### Description of the drawings

The invention will be further elucidated referring to an preferred embodiment shown in the drawing wherein shown in:
Fig. 1a a view of a crate in perspective with an overmoulded section taken apart;
fig. 2 a side view of a crate partly in cross section;

### Detailed description of embodiments

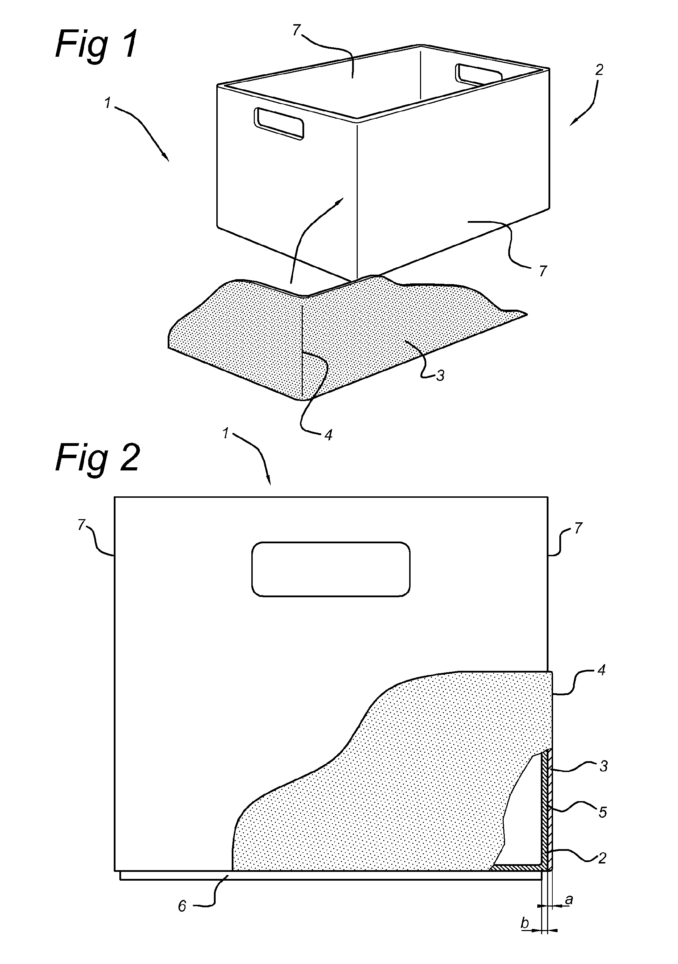

Fig. 1 shows a crate 1 with a first crate section 2 after the first mould step in exploded view with the second crate section 3 that is moulded over the first crate section 1 in a second mould.

Fig. 2 shows a side view of a crate 1 partly in cross section. Crate 1 comprises a first crate section 2 with a wall thickness "b" and a second crate section with a wall thickness "a". Second crate section 3 adheres to first crate section 2 at an interface 5. Second crate section 3 continues around a corner of first crate section 2 and extends over walls of the first crate section 2. First crate section 2 is left blank while second crate section 3 is dotted to indicate that the crate sections have different and/or contrasting colours.

In the method according to an aspect of the invention, a first crate section 2 is moulded using a first polyalkene material, usually a polypropylene or HDPE. This material is injection moulded in a first mould. This first polyalkene material has preferably a MFI < 10. The crate 1 usually has a bottom wall and four side walls attached to one another and the bottom in order to form a crate, for example for bottles, such as beer bottles. Subsequently the first crate section 2 is positioned in a second mould wherein the second crate section 3 is moulded over the first crate section using a second polyalkene material, preferably a polyalkene such as HDPE, and wherein the second polyalkene material has a MFI between 20 and 40 and even more preferably a MFI around 30. In the method of the invention, good results were achieved with polyalkene material which was of the same type as the first polyalkene material, for instance HDPE or polypropylene.

Figure 2 shows a side view of crate 1 of figure 1. Figure 2 is partly sectioned by way of illustration. Crate 1, having a handgrip for conveniently carrying the crate 1, comprises two crate sections 2,3. The crate sections 2, 3 have different and/or contrasting colours for decorating the crate with for example a house style. In fact crate section 3 can have every desired shape and/or size to meet the demands concerning the appearance of the crate. Crate section 2 has a wall thickness "b" of typically 2,5 mm whereas crate section 3 has a noticeable smaller wall thickness "a" preferably between 1,5 and 2,0 mm. The sections 2, 3 adhere to each other at interface 5. Crate sections moulded using a polyalkene, like a HDPE, adhere by adhesion and fusing (melt together). This results in a very good bonding of the crate sections to each other.
Generally, the wall thickness of an injection moulded crate will be about 1.5-3 mm, in particular about 2.5 mm. The overmoulded layer will generally have about the same thickness as the wall of the earlier formed crate section 1. In particular, however, better results have been achieved with overmould layers which are thinner than the thickness of the wall. In particular, the overmould layer is about 0.5-2 mm, preferably about 1.0 - 2.0 mm, preferably about 0.5-1.5 mm. This will reduce stress between the layers.
The indication, as mentioned above, can be a logo, brand name or a house style. These indications are usually provided on one or more outside walls of a bottle crate.
It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. Injection moulded crate (1) comprising a bottom part (6) and walls (7), said crate comprising a first crate section (2) injection moulded using a first polyalkene material and a second crate section (3) subsequently injection moulded over at least a part of said first crate section using a second synthetic material, **characterised in that** said second synthetic material is a polyalkene with a higher Melt Flow Index (MFI) than the first polyalkene material.

2. Injection moulded crate according to claim 1, wherein the MFI of said second polyalkene material is higher than or equal to 20 (MFI>=20).

3. Injection moulded crate according to any one of the preceding claims, wherein the thickness (b) of said first crate section (2) is higher then the thickness (a) of said second crate section (3).

4. Injection moulded crate according to claim 3, wherein the thickness (a) of said second crate section (3) is between 1.0 mm and 2.0 mm.

5. Injection moulded crate according to any one of the preceding claims, wherein said first polyalkene material and said second polyalkene material have a different colour.

6. Injection moulded crate according to any one of the preceding claims, wherein said second crate section (3) continues at an edge (4) of the crate and extends over walls (7) of said crate.

7. Injection moulded crate according to claim 6, wherein said second crate section (3) is circumferential with regard to said crate.

8. Injection moulded crate according to any one of the preceding claims, wherein said first polyalkene material and said second material comprise a HDPE.

9. Method for injection moulding a crate (1) using polyalkene material, comprising the steps of:
- injection moulding a first crate section (2) in a first mould using a first polyalkene material;
- providing a second injection mould which comprises a cavity having a contour of a second crate section (3);
- positioning said first crate section (2) in said second injection mould with said first crate section at least partly forming a moulding cavity, and
- injecting a second polyalkene material in said moulding cavity, said second polyalkene material having a MFI >20.

10. Injection mould for injection over moulding a plastic crate for providing a crate section with a contrasting colour, said injection mould comprising an accommodation for receiving said plastic crate, a mould wall having the contour of said crate section cut out in said mould wall, said crate providing a mould cavity forming wall and wherein the mould is equipped for being injected with a polyalkene material having a MFI >20.

11. Injection moulded crate (1) comprising a bottom part (6) and walls (7), wherein at least part of one or more selected from the group consisting of the bottom part (6) and walls (7) comprise a laminate of a first polyalkene and a second polyalkene wherein the second polyalkene material has a higher Melt Flow Index than the first polyalkene material.

12. Injection moulded crate comprising one or more of the characterising features described in the description and/or shown in the attached drawings.

13. Method comprising one or more of the characterising features described in the description and/or shown in the attached drawings.
